# EUROPEAN PATENT APPLICATION

(11) **EP 4 722 581 A1**
(43) Date of publication of application: **08.04.2026**
(21) Application number: 24815232.4
(22) Date of filing: 16.05.2024
(51) Int. Cl.: F21S 2/00, G09F 13/18, F21Y 115/10

(54) **LIGHT GUIDE MEMBER AND LIGHTING DEVICE**

(30) Priority: 30.05.2023 JP 2023088881
(71) Applicant: Nitto Denko Corporation, Ibaraki-shi, Osaka 567-8680 (JP)
(72) Inventor: MUKADEYAMA, Shimpei, Ibaraki-shi, Osaka 567-8680 (JP); INOUE, Koichi, Ibaraki-shi, Osaka 567-8680 (JP); YOSHIKAWA, Jin, Ibaraki-shi, Osaka 567-8680 (JP)
(74) Representative: Hoffmann Eitle
(86) International application number: PCT/JP2024/018132
(87) International publication number: WO 2024/247748

(57) **Abstract**

A light guide member **(110A)** includes: a light guide layer **(10)** having a first main surface **(10m),** a second main surface **(10n)** at an opposite side from the first main surface, and a light receiving portion **(10s1)** configured to receive light emitted from a light source **(LS);** and a light extraction structure configured to extract a portion of light propagated in the light guide layer **(10)** from the first main surface or the second main surface. The light guide member **(110A)** has a first region **(R1)** in which the light extraction structure is present, and a second region **(R2)** in which the light extraction structure is not present, in a plan view from a normal direction of the first main surface. A length of the first region **(R1)** in a first direction parallel to a light guide direction of the light guide layer is 350 mm or more. A ratio **Wb/Wa** of a length **Wb** of the first region **(R1)** in a second direction crossing the first direction to a length **Wa** of the light guide layer in the second direction is more than 30% and less than 100%.

## Description

### TECHNICAL FIELD

The present invention relates to a light guide member and an illumination device.

### BACKGROUND ART

Various illumination devices employing an LED element as a light source have recently been being developed. Among these devices is, for example, a sheet-like (including plate-like and film-like) illumination device that has a light guide layer and a light source that emits light toward a side surface of the light guide layer.

For example, Patent Document No. 1 discloses an illumination device that has a light guide plate, a light source disposed opposite an end surface of the light guide plate, and a printed dot pattern for diffusing light that is formed on one main surface of the light guide plate.

### CITATION LIST

### PATENT LITERATURE

Patent Document No. 1: International Publication WO2010/150364

### SUMMARY OF INVENTION

### TECHNICAL PROBLEM

In an illumination device that has a light guide layer and a light source that emits light toward a light receiving portion of the light guide layer (e.g., a side surface or end portion of the light guide layer) so that light enters from the light receiving portion into the light guide layer, luminance may decrease with an increase in distance from the light source.

It is an object of the present invention to provide an illumination device in which a decrease in luminance with an increase in distance from a light source is reduced, and a light guide member used in such an illumination device.

### SOLUTION TO PROBLEM

Embodiments of the present invention provide the solutions described in the following items.

### [Item 1]

A light guide member comprising:
a light guide layer having a first main surface, a second main surface at an opposite side from the first main surface, and a light receiving portion configured to receive light emitted from a light source; and
a light extraction structure configured to extract a portion of light propagated in the light guide layer from the first main surface or the second main surface, wherein
the light guide member has a first region in which the light extraction structure is present, and a second region in which the light extraction structure is not present, in a plan view from a normal direction of the first main surface,
a length of the first region in a first direction parallel to a light guide direction of the light guide layer is 350 mm or more, and
a ratio **Wb/Wa** of a length **Wb** of the first region in a second direction crossing the first direction to a length **Wa** of the light guide layer in the second direction is more than 30% and less than 100%.

### [Item 2]

The light guide member of item 1, wherein the ratio **Wb/Wa** is 40% or more and 90% or less.

### [Item 3]

The light guide member of item 1 or 2, wherein the light extraction structure has a plurality of internal spaces configured to extract light by total internal reflection.

### [Item 4]

The light guide member of item 3, wherein a ratio of an area of the plurality of internal spaces to an area of the first region is 3% or more, in a plan view from the normal direction of the first main surface.

### [Item 5]

The light guide member of any one of items 1 through 4, wherein the light extraction structure is formed in a light extraction layer provided at the first main surface side or the second main surface side of the light guide layer.

### [Item 6]

The light guide member of any one of items 1 through 5, wherein the first region includes at least two partial regions discretely arranged in the first direction.

### [Item 7]

The light guide member of any one of items 1 through 6, wherein the first region includes at least two partial regions discretely arranged in the second direction.

### [Item 8]

The light guide member of any one of items 1 through 7, wherein the ratio **Wb/Wa** decreases with an increase in distance from the light receiving portion.

### [Item 9]

The light guide member of item 8, wherein the length **Wa** of the light guide layer in the second direction increases with an increase in distance from the light receiving portion.

### [Item 10]

The light guide member of item 8 or 9, wherein the length **Wb** of the first region in the second direction decreases with an increase in distance from the light receiving portion.

### [Item 11]

The light guide member of any one of items 1 through 7, wherein the ratio **Wb/Wa** increases with an increase in distance from the light receiving portion.

### [Item 12]

An illumination device comprising:
the light guide member of any one of items 1 through 11; and
a light source disposed so as to emit light toward the light receiving portion of the light guide member.

### ADVANTAGEOUS EFFECTS OF INVENTION

Embodiments of the present invention provide an illumination device in which a decrease in luminance with an increase in distance from a light source is reduced, and a light guide member used in such an illumination device.

### BRIEF DESCRIPTION OF DRAWINGS

FIG. **1A** is a schematic plan view of an illumination device **200A** according to an embodiment of the present invention.
FIG. **1B** is a schematic cross-section view of the illumination device **200A.**
FIG. **2** is a schematic plan view of the illumination device **200A.**
FIG. **3A** is a schematic cross-sectional view of an internal space **24A** that may be included in a light guide member **110A.**
FIG. **3B** is a schematic plan view of the internal space **24A.**
FIG. **3C** is a schematic plan view of a variation of the internal space **24A.**
FIG. **4** is a schematic cross-sectional view of an illumination device **200A1** according to a variation of the embodiment of the present invention.
FIG. **5** is a schematic plan view of an illumination device **200B** according to another embodiment of the present invention.
FIG. **6** is a schematic plan view of an illumination device **200B1** according to another embodiment of the present invention.
FIG. **7** is a schematic plan view of an illumination device **200B2** according to another embodiment of the present invention.
FIG. **8** is a schematic plan view of an illumination device **200C** according to still another embodiment of the present invention.
FIG. **9** is a schematic plan view of an illumination device **200D** according to still another embodiment of the present invention.
FIG. **10** is a schematic plan view of an illumination device **900** of a comparative example.
FIG. **11** is a graph showing results of evaluation of experimental illumination devices (samples 1 to 3).
FIG. **12** is a graph showing results of evaluation by simulations 1 to 5.
FIG. **13** is a graph showing results of evaluation by simulations 6 to 10.
FIG. **14** is a graph showing results of evaluation by simulations 11 to 15.
FIG. **15** is an optical image of experimental illumination devices (samples).

### DESCRIPTION OF EMBODIMENTS

Light guide members and illumination devices according to embodiments of the present invention will be described below with reference to the accompanying drawings. The light guide members and illumination devices according to the embodiments of the present invention are not limited to those illustrated below. Like parts are designated by like reference signs throughout the specification and may not redundantly described.

### (First embodiment)

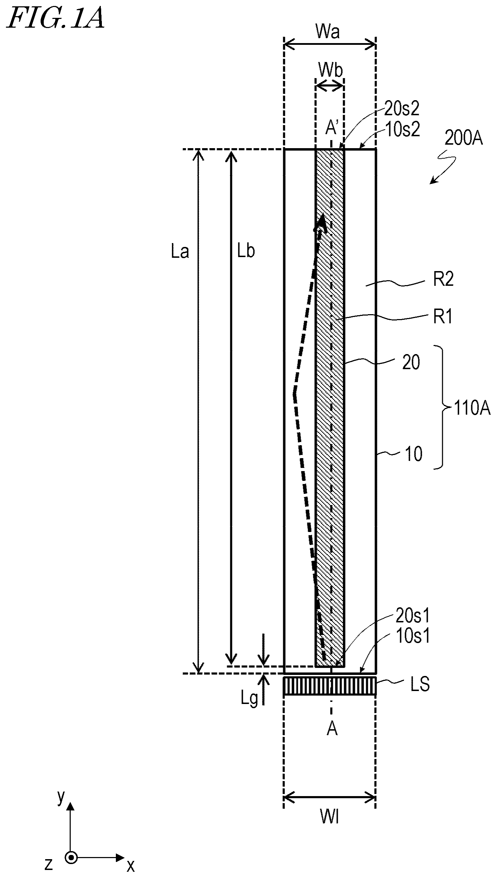

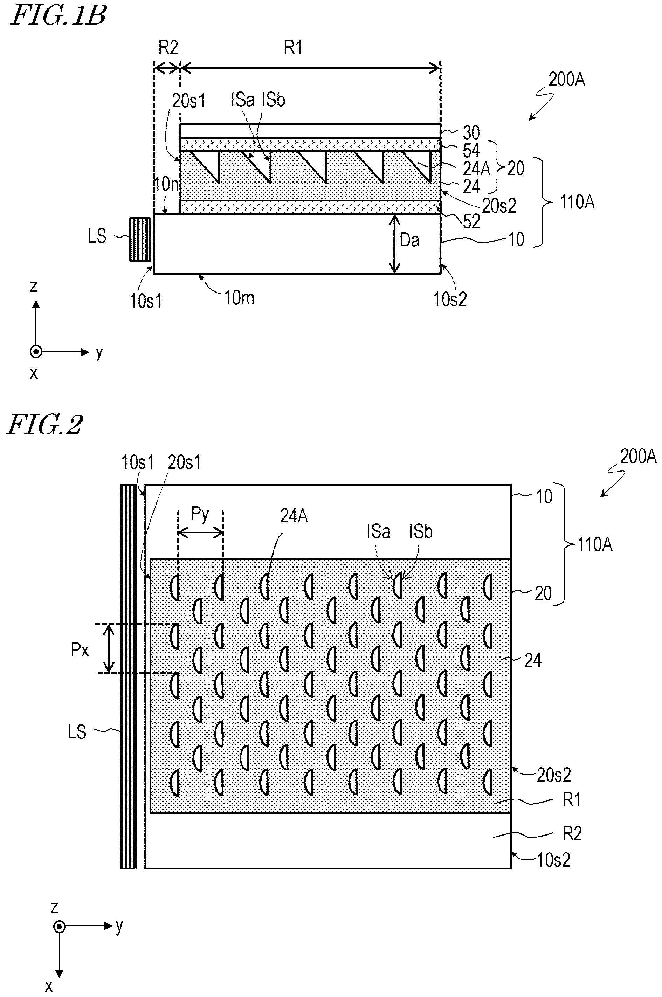

An illumination device **200A** according to this embodiment will be described with reference to FIG. **1A** and FIG. **1B****.** FIG. **1A** and FIG. **1B** illustrate a schematic plan view and a cross-sectional view, respectively, of the illumination device **200A.** FIG. **1B** illustrates a cross-section taken along line **A-A'** of FIG. **1A****.** These figures illustrate an orthogonal coordinate system that has an x-axis, a y-axis and a z-axis that are orthogonal to one another. The direction of an arrow on the x-axis is referred to as a +x direction, and the opposite direction thereof is referred to as a -x direction. When the ±x directions are not distinguished, the ±x directions are simply referred to as an x direction. The same applies to ±y directions and ±z directions.

The illumination device **200A** has a light guide member **110A** and a light source **LS.**

The light guide member **110A** has a light guide layer **10** and a light extraction layer **20.** The light guide layer **10** has a first main surface **10m,** a second main surface **10n** provided at the opposite side from the first main surface **10m,** and a light receiving portion that receives light emitted from the light source **LS.** In the illustrated example, the light receiving portion of the light guide layer **10** is a side surface (light receiving side surface) **10s1** of the light guide layer **10** that is closer to the light source **LS.** Note that the light receiving portion of the light guide layer **10** may be a portion of the first main surface **10m** or the second main surface **10n** (e.g., an end portion of the first main surface **10m** or the second main surface **10n).** The light extraction layer **20** is provided at the second main surface **10n** side of the light guide layer **10.** The light extraction layer **20** has a light extraction structure with which a portion of light propagated in the light guide layer **10** is emitted from the first main surface **10m.** That is, a portion of light propagated in the light guide layer **10** is extracted from the first main surface **10m** of the light guide layer **10** and emitted toward the -z direction in the figures. The -z direction in the figures may also be referred to as the forward direction of the illumination device **200A** (or the forward direction of the light guide member **110A**).

The light guide member **110A** has a first region **R1** in which the light extraction layer **20** is present, and a second region **R2** in which the light extraction layer **20** is not present, in a plan view from the normal direction of the first main surface **10m** of the light guide layer **10.** A length **Lb** of the first region **R1** in a first direction parallel to the light guide direction (+y direction in the figures) of the light guide layer **10** is 350 mm or more. The ratio **Wb/Wa** of a length **Wb** of the first region **R1** in a second direction crossing the first direction to a length **Wa** of the light guide layer **10** in the second direction is more than 30% and less than 100%. Although herein the first direction is the y direction in the figures and the second direction is the x direction in the figures, the second direction is not limited to the direction orthogonal to the first direction. The length **Wb** of the first region **R1** in the second direction may be hereinafter simply referred to as "the width **Wb** of the first region **R1,"** and the length **Lb** of the first region **R1** in the first direction may be hereinafter simply referred to as "the length **Lb** of the first region **R1."** Likewise, for the light guide layer **10,** the length **Wa** of the light guide layer **10** in the second direction may be simply referred to as "the width **Wa** of the light guide layer **10,"** and the length **La** of the light guide layer **10** in the first direction may be simply referred to as "the length **La** of the light guide layer **10."**

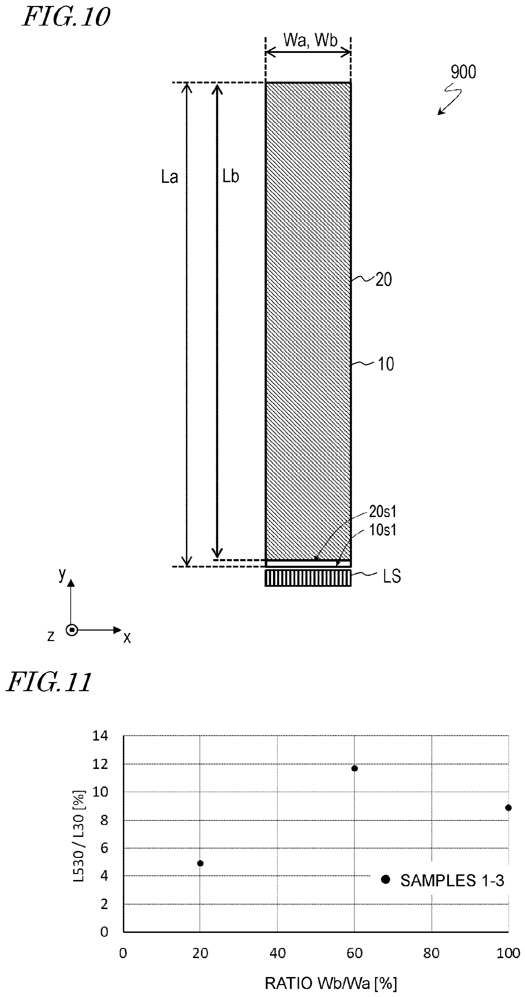

In the illumination device **200A,** as compared to an illumination device **900** of a comparative example illustrated in FIG. **10****,** a decrease in luminance with an increase in distance from the light source **LS** (i.e., a distance from the light receiving side surface **10s1)** can be reduced. In the illumination device **900** of the comparative example, the width **Wb** of the first region **R1** is equal to the width **Wa** of the light guide layer **10.** That is, the illumination device **900** is different from the illumination device **200A** in that in the former, the ratio **Wb/Wa** of the width **Wb** of the first region **R1** to the width **Wa** of the light guide layer **10** is 100%. In the illumination device **200A,** the light guide layer **10** has the second region **R2** in which the light extraction layer **20** is not present, at end portions of the light guide layer **10** in the width **Wa** direction, and therefore, light that is emitted from the light source **LS** to enter the light guide layer **10** is propagated in the light guide layer **10** farther from the light source **LS,** as illustrated by a dashed-line arrow in FIG. **1A****.** Therefore, the decrease in luminance with an increase in distance from the light source **LS** can be reduced. As described below with reference to an experiment example, in the case in which the ratio **Wb/Wa** of the width **Wb** of the first region **R1** to the width **Wa** of the light guide layer **10** is more than 30% and less than 100%, the decrease in luminance with an increase in distance from the light source **LS** is reduced compared to the case in which the ratio **Wb/Wa** is 100%. The problem of the decrease in luminance with an increase in distance from the light source is particularly significant for illumination devices in which a length from the light source (the length of the light guide layer along the light guide direction) is great. In the illumination device **200A,** for example, the length **Lb** of the first region **R1** is preferably 350 mm or more in terms of reducing the decrease in luminance with an increase in distance from the light source **LS.** Furthermore, the length **Lb** of the first region **R1** may be 500 mm or more, 700 mm or more, or 1000 mm or more. The upper limit of the length **Lb** of the first region **R1** is not particularly limited, and may, for example, be 100 m or less, 50 m or less, or 10 m or less. The width **Wa** of the light guide layer **10** is, for example, 10 mm or more, 50 mm or less, or 100 mm or less. The upper limit of the width **Wa** of the light guide layer **10** is not particularly limited, and may, for example, be 100 m or less, 50 m or less, 10 m or less, 5000 mm or less, or 1000 mm or less. The width **Wb** of the first region **R1** may be appropriately determined so that the ratio **Wb/Wa** of the width **Wb** of the first region **R1** to the width **Wa** of the light guide layer **10** is in the range of more than 30% and less than 100%.

As illustrated in FIG. **1B****,** the light extraction layer **20** has, as the light extraction structure, a luminous intensity distribution control structure capable of directing a portion of light propagated in the light guide layer **10** at least in the forward direction of the light guide member **110A** (i.e., the forward direction of the illumination device **200A).** The luminous intensity distribution control structure illustrated herein has a plurality of internal spaces **24A** that have a forward inclined surface **ISa** that directs light in the forward direction of the light guide member **110A** due to total internal reflection. Each internal space **24A** has a first inclined surface (forward inclined surface) **ISa** that directs a portion of light propagated in the light guide layer **10** toward the first main surface **10m** due to total internal reflection, and a second inclined surface (rearward inclined surface) **ISb** that is provided on the opposite side from the first inclined surface **ISa.** The term "forward" with respect to the "forward inclined surface" of each internal space **24A** refers to one of the inclined surfaces of the internal space that is located closer to the light receiving side surface **10s1.** One of the inclined surfaces of each internal space 24 that is located on the opposite side from the light receiving side surface **10s1** (farther from the light receiving surface) may be referred to as a "rearward inclined surface."

The light extraction layer **20,** which has the plurality of internal spaces **24A,** includes a shape-forming film **24** having recessed portions **24A** (indicated by the same reference sign as that of the internal spaces **24A),** and an adhesive layer **54.** A light extraction structure having a plurality of internal spaces (air cavities) is described in, for example, WO2019/182091, WO2019/146628, WO2011/124765, and WO2019/087118, which are incorporated herein by reference in their entirety. The light extraction layer **20** is disposed at the second main surface **10n** side of the light guide layer **10** with an adhesive layer **52** interposed therebetween. The shape-forming film **24** and a substrate layer **30** are attached together by the adhesive layer **54.**

The shape-forming film **24,** which is used for forming the internal spaces **24A,** may be produced as follows, for example. A concaved-and-convexed (embossed) shape-forming film can be produced in accordance with the method described in PCT Japanese National-Phase Laid-Open Publication No. 2013-524288. Specifically, a surface of a polymethylmethacrylate (PMMA) film is coated with lacquer (Finecure RM-64, manufactured by Sanyo Chemical Industries, Ltd.), an optical pattern is embossed on the film surface including the lacquer, and then the lacquer is cured. Thus, an intended concaved-and-convexed (embossed) shape-forming film is produced.

The light guide layer **10** is formed of a known material having a high visible light transmittance. The light guide layer **10** is formed of, for example, an acrylic resin such as polymethylmethacrylate (PMMA), a polycarbonate (PC) resin, a cycloolefin resin, or glass (e.g., quartz glass, alkali-free glass, or borosilicate glass). The light guide layer **10** has a refractive index n_{GP} of, for example, 1.40 or more and 1.80 or less. The refractive index refers to a refractive index measured by an ellipsometer at a wavelength of 550 nm unless otherwise specified. A thickness **Da** (a length in the z direction) of the light guide layer **10** may be appropriately set, depending on the application thereof. The thickness **Da** of the light guide layer **10** is, for example, 0.05 mm or more and 50 mm or less. The lower limit of the thickness **Da** of the light guide layer **10** is preferably 0.5 mm or more, 1 mm or more, 1.5 mm or more, or 2 mm or more, for example. The upper limit of the thickness **Da** of the light guide layer **10** is preferably 10 mm or less, 8 mm or less, 6 mm or less, or 5 mm or less, for example. The magnitude of the decrease in luminance with an increase in distance from the light source **LS** increases with a decrease in the thickness **Da** of the light guide layer **10.** Therefore, as shown in an experiment example below, in the case in which the thickness **Da** of the light guide layer **10** is small, the effect of reducing the decrease in luminance can be obtained at a point where the distance from the light source **LS** is shorter, compared to the case in which the ratio **Wb/Wa** is 100%. In contrast to this, in the case in which the thickness **Da** of the light guide layer **10** is great, the effect of reducing the decrease in luminance can be obtained at a point where the distance from the light source **LS** is relatively long, compared to the case in which the ratio **Wb/Wa** is 100%.

The substrate layer **30** is formed of a plastic having a high visible light transmittance, which is also used for the light guide layer **10.** Examples of the plastic include acrylic resins such as polymethylmethacrylate (PMMA), polycarbonate (PC) resins, and cycloolefin resins. The substrate layer **30** has a thickness of, for example, 1 µm or more and 1000 µm or less, preferably 10 µm or more and 100 µm or less, and more preferably 20 µm or more and 80 µm or less. The substrate layer **30** preferably has a refractive index of 1.40 or more and 1.70 or less, more preferably 1.43 or more and 1.65 or less.

The adhesive layers **52** and **54** each independently have a thickness of, for example, 0.1 µm or more and 100 µm or less, preferably 0.3 µm or more and 100 µm or less, and more preferably 0.5 µm or more and 50 µm or less. The adhesive layers **52** and **54** each independently have a refractive index of, preferably 1.42 or more and 1.60 or less, more preferably 1.47 or more and 1.58 or less. The refractive index of each of the adhesive layers **52** and **54** is also preferably close to the refractive index of the light guide layer **10,** the shape-forming film **24,** or the substrate layer **30,** which is in contact with the adhesive layer. The absolute value of the difference between the refractive indices is preferably 0.2 or less.

As used herein, the term "adhesive" refers to a pressure-sensitive adhesive (also referred to as a self-stick adhesive), but is not limited to this. Specific examples of the adhesive include rubber adhesives, acrylic adhesives, silicone-based adhesives, epoxy adhesives, cellulose adhesives, and polyester adhesives. These adhesives may be used alone or in combination.

The adhesive layer **54,** which is in contact with a flat portion between adjacent recessed portions **24A** of the surface of the shape-forming film **24** to form the internal spaces **24A,** is preferably configured to be able to be attached to the surface of the shape-forming film **24** without filling the recessed portions **24A.** As an adhesive that is preferably used to form such an adhesive layer, any of the adhesives described in WO2021/167090, WO2021/167091, and WO2022/176658, which are incorporated by reference herein in their entirety, can be preferably used. The polyester adhesive described in WO2022/176658 is particularly preferable.

In the illustrated example, a side surface **20s1** (side surface that is located on the same side on which the light receiving side surface **10s1** of the light guide layer **10** is located) of the light extraction layer **20** is located farther from the light source **LS** than is the light receiving side surface **10s1** of the light guide layer **10.** A distance **Lg** between the light receiving side surface **10s1** of the light guide layer **10** and the side surface **20s1** of the light extraction layer **20** is preferably 10% or less, 5% or less, or 1% or less of the length **La** of the light guide layer **10,** for example. In some positional arrangements or types of the light source **LS,** if the distance **Lg** is, for example, 10% or less of the length **La** of the light guide layer **10,** the effect of reducing the decrease in luminance with an increase in distance from the light source **LS** is considered to be less affected. Note that the side surface **20s1** of the light extraction layer **20** may be disposed such that the distance between the light source **LS** and the light receiving side surface **10s1** of the light guide layer **10** is equal to the distance between the light source **LS** and the side surface **20s1** of the light extraction layer **20** (i.e., **Lg** = 0).

In the illustrated example, a side surface **10s2** (side surface farther from the light source **LS)** opposite the light receiving side surface **10s1** of the light guide layer **10** is disposed such that the distance thereof from the light source is equal to that of a side surface **20s2** (side surface farther from the light source **LS)** opposite the side surface **20s1** of the light extraction layer **20.** The side surface **10s2** may be disposed such that the distance of the side surface **20s2** of the light extraction layer **20** from the light source **LS** is shorter than that of the side surface **10s2** of the light guide layer **10.**

The light source **LS** is disposed so as to emit light toward the light receiving portion (in this example, the light receiving side surface **10s1)** of the light guide layer **10.** The light source **LS** is, for example, an LED device. The light source **LS** may include a plurality of LED devices. The plurality of LED devices may, for example, be arranged in the x direction. Llight emitted from each of one or more LED devices diverges or spreads in the y direction. The directional half-power angle of the LED device is preferably ±10° or more and ±60° or less (20° or more and 120° or less), for example.

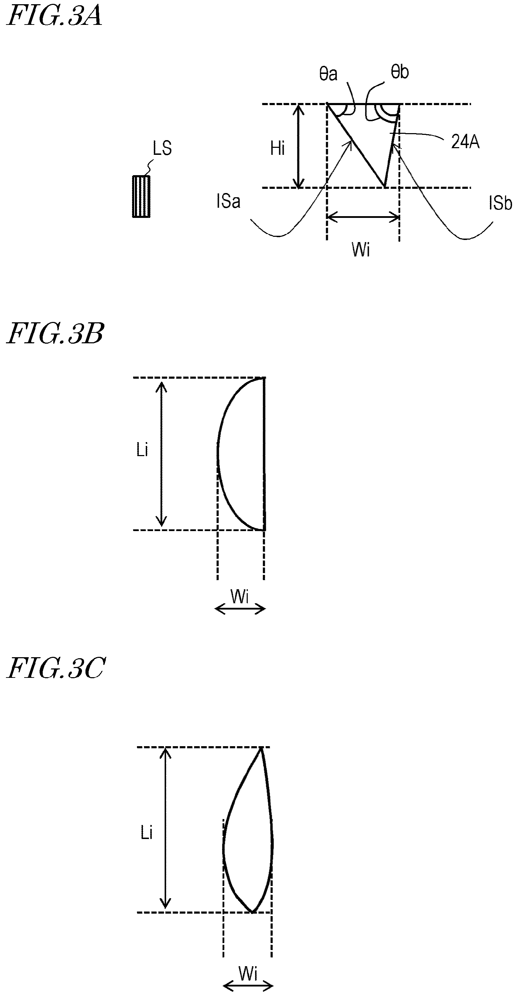

Next, an example of the plan-view shape and positional arrangement of the internal spaces **24A** will be described with reference to FIG. **2.** FIG. **2** is a schematic plan view of a light guide member **110.** A shape of the internal space **24A** will be described with reference to FIG. **3A,** FIG. **3B,** and FIG. **3C.** FIG. **3A** is a schematic cross-sectional view of the internal space **24A.** FIG. **3B** is a schematic plan view of the internal space **24A.** FIG. **3C** is a schematic plan view of a variation of the internal space **24A.**

As illustrated in FIG. **2****,** the plurality of internal spaces **24A** are, for example, discretely arranged in the direction (the first direction, i.e., the y direction in the figures) parallel to the light guide direction of the light guide layer **10** and in the direction (the second direction, i.e., the x direction in the figures) orthogonal to the light guide direction of the light guide layer **10.** For the size of the internal space **24A** (a length **Li,** a width **Wi:** see FIG. **3A** and FIG. **3B****),** the length **Li** is preferably 10 µm or more and 500 µm or less, and the width **Wi** is preferably 1 µm or more and 100 µm or less, for example. A height **Hi** (see FIG. **3A****)** of the internal space **24A** is preferably 1 µm or more and 100 µm or less in terms of light extraction efficiency.

Although an example has herein been described in which the plurality of internal spaces **24A** are discretely arranged in the direction (the first direction, i.e., the y direction in the figures) parallel to the light guide direction of the light guide layer **10** and in the direction (the second direction, i.e., the x direction in the figures) orthogonal to the light guide direction of the light guide layer **10,** the present invention is not limited to this. The plurality of internal spaces **24A** may be discretely arranged in the direction parallel to the light guide direction of the light guide layer **10** and in a direction crossing the light guide direction of the light guide layer **10.** The discrete positional arrangement of the internal spaces **24A** may be appropriately set, depending on the shape of the light guide layer **10,** the required luminous intensity distribution, or the like. In the light guide layer **10,** light is propagated in various directions. Note that the +y direction is referred to as a "light guide direction," and light having a (non-zero) component in the y direction is assumed to be being propagated in the y direction. The same applies to the other directions. Specifically, light propagated in the -y direction includes all light rays having a (non-zero) component in the -y direction.

The plurality of internal spaces **24A** are, for example, discretely arranged in the direction parallel to the light guide direction and in a direction crossing the light guide direction. The discrete positional arrangement may be periodical (regular) in at least one direction, or may not be regular. Note that it is preferable that the plurality of internal spaces **24A** be arranged uniformly in terms of mass production. For instance, in the example shown in FIG. **2****,** the plurality of internal spaces **24A** having substantially the same shape and a curved surface protruding in substantially the same direction are arranged in the direction (the first direction, the y direction in the figures) parallel to the light guide direction of the light guide layer **10** and in the direction (the second direction, the x direction in the figures) orthogonal to the light guide direction of the light guide layer **10,** discretely and periodically throughout the region. In this case, a pitch **Px** is preferably 10 µm or more and 500 µm or less, and a pitch **Py** is preferably 10 µm or more and 500 µm or less, for example. In the example shown in FIG. **2****,** additional internal spaces **24A** are provided at positions shifted from the above-described internal spaces **24A** by a half pitch in each of the y direction and the x direction.

As shown in FIG. **2****,** the forward inclined surfaces **ISa** each form a curved surface protruding toward the light source **LS** as viewed from the normal direction of a main surface (the first main surface **10m** or the second main surface **10n)** of the light guide layer **10.** The light source **LS** is, for example, an LED device, or includes a plurality of LED devices arranged in the x direction. Light that is emitted from each of the plurality of LEDs diverges or spreads in the y direction. Therefore, the forward inclined surfaces **ISa,** which have a curved surface protruding toward the light source **LS,** act uniformly on light. In the case in which a coupling optical system is provided between the light source **LS** and the light receiving side surface **10s1** of the light guide member **110A** to cause light having a high degree of parallelism (light that does not largely diverge or spread in the y direction) to enter the light guide member **110A,** the forward inclined surfaces **ISa** may be parallel to the x direction. Instead of the discrete internal spaces **24A,** internal spaces such as grooves extending in the x direction (e.g., triangular prisms) may be provided, for example.

As shown in FIG. **3A****,** the internal space **24A** has, for example, a triangular cross-section. An inclination angle **θa** of the forward inclining surface **ISa,** which is closer to the light source **LS,** is 10° or more and 70° or less, for example. In the case in which the inclination angle **θa** is less than 10°, the controllability of the luminous intensity distribution may deteriorate, and the light extraction efficiency may also decrease. Meanwhile, in the case in which the inclination angle **θa** exceeds 70°, it may be difficult to produce the internal structure **24A,** for example. An inclination angle **θb** of the rearward inclined surface **ISb** is 50° or more and 100° or less, for example. In the case in which the inclination angle **θb** is less than 50°, stray light may occur in an unintended direction. Meanwhile, in the case in which the inclination angle **θb** exceeds 100°, it may be difficult to produce the internal structure **24A,** for example. As shown in FIG. **3B** and FIG. **3C**, the length **Li** of the internal space **24A** is preferably 10 µm or more and 500 µm or less, and the width **Wi** of the internal space **24A** is preferably 1 µm or more and 100 µm or less. The length **Li** is at least twice the width **Wi,** for example. The height **Hi** (see FIG. 3A) is preferably 1 µm or more and 100 µm or less. Although it is intended that a recessed portion having a plan-view shape shown in FIG. **3B** should be formed, a recessed portion having a plan-view shape shown in FIG. 3C may actually be formed in the case of some processing precision. Even in such a case, the plan-view shape of the internal space **24A** may be characterized by the length **Li** and the width **Wi**. The shape of the curved surface protruding toward the light source **LS** of the forward inclining surface **ISa** as viewed from the normal direction of the main surface of the light guide layer **10** may be represented by, for example, a quartic curve. The internal spaces **24A** may be formed by, for example, the shape-forming film **24** having recessed portions in a surface thereof and the adhesive layer **54,** as described the example of FIG. **1B****.**

The ratio of the area of the plurality of internal spaces **24A** to the area of the first region **R1** (in this example, the area of the light extraction layer **20)** in a plan view of the light guide member **110A** from the normal direction of the first main surface **10m** of the light guide layer **10** (the ratio may be referred to as an "occupancy area ratio" of the plurality of internal spaces **24A)** is preferably 1% or more and 80% or less, more preferably 1% or more and 50% or less, and even more preferably 45% or less. In order to provide a high transmittance and/or a low haze value, the occupancy area ratio of the plurality of internal spaces **24A** is preferably 30% or less, more preferably 10% or less, and even more preferably 5% or less. The magnitude of the decrease in luminance with an increase in distance from the light source **LS** increases with an increase in the occupancy area ratio of the plurality of internal spaces **24A.** Therefore, as described in an experiment example below, in the case in which the occupancy area ratio of the plurality of internal spaces **24A** is high, the effect of reducing the decrease in luminance can be obtained at a point having a shorter distance from the light source **LS** compared to when the ratio **Wb/Wa** is 100%. In contrast to this, in the case in which the occupancy area ratio of the plurality of internal spaces **24A** is low, the effect of reducing the decrease in the luminance is obtained at a point having a relatively great distance from the light source **LS** compared to when the ratio **Wb/Wa** is 100%. In terms of reducing the decrease in luminance with an increase in distance from the light source **LS,** the lower limit of the occupancy area ratio of the internal space **24A is** preferably 1% or more, 2% or more, 3% or more, 3.5% or more, or 3.7% or more, for example.

### [Another example of positional arrangement of light extraction layer]

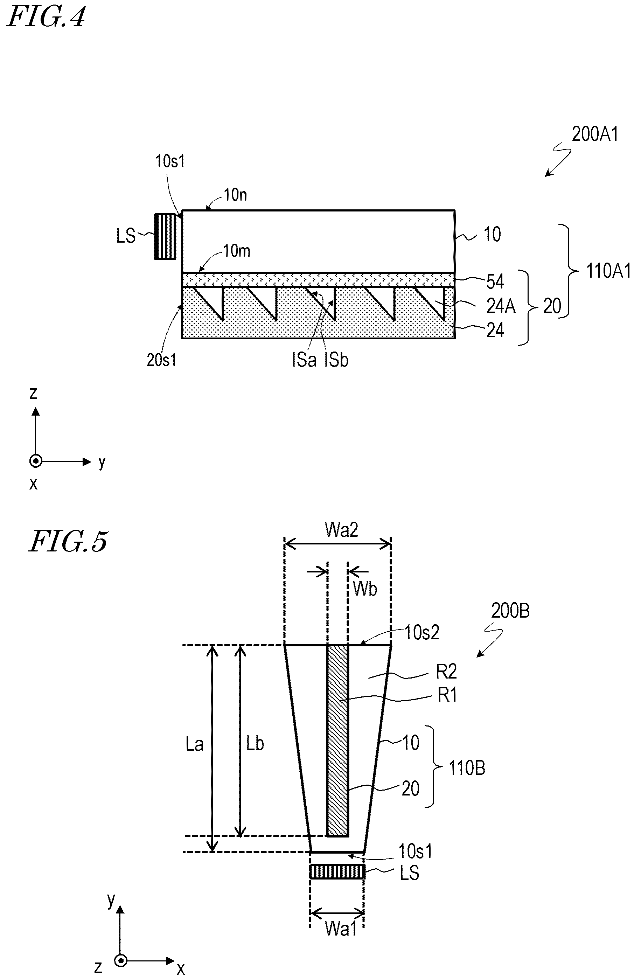

Another example of the positional arrangement of the light extraction layer **20** will be described with reference to FIG. **4.** FIG. **4** is a schematic cross-sectional view of an illumination device **200A1** according to a variation of this embodiment. The illumination device **200A1** has a light guide member **110A1** and a light source **LS.** The light guide member **110A1** is different from the light guide member **110A** of the illumination device **200A** shown in FIG. **1B** in that in the former, the light extraction layer **20** is provided at the first main surface **10m** side of the light guide layer **10.** In the light guide member **110A1,** a portion of light propagated in the light guide layer **10** is also extracted from the first main surface **10m,** and then emitted in the forward direction of the light guide member **110A1** (the -z direction in the figures). The light extraction layer **20** has a luminous intensity distribution control structure capable of directing a portion of light propagated in the light guide layer **10** at least in the forward direction of the light guide member **110A1** (i.e., the forward direction of the illumination device **200A1).** The light extraction layer **20,** which has a plurality of internal spaces **24A** and forms a luminous intensity distribution control structure, includes a shape-forming film **24** having recessed portions **24A** (indicated by the same reference sign of the internal space **24A)** in a surface thereof, and an adhesive layer **54.** The shape-forming film **24** and the light guide layer **10** are attached together by the adhesive layer **54.** Like the illumination device **200A1,** the distance of the light receiving side surface **10s1** of the light guide layer **10** from the light source **LS** may be equal to the distance of the side surface **20s1** of the light extraction layer **20** from the light source **LS.**

### [Another example of luminous intensity distribution control structure]

In the foregoing description, a configuration has been illustrated in which a luminous intensity distribution control structure having a plurality of internal spaces is formed in the light extraction layer **20,** which is provided on one of the two main surfaces (the first main surface **10m** and the second main surface **10n)** of the light guide layer **10.** A luminous intensity distribution control structure having a plurality of internal spaces may be formed in the light guide layer **10.** In a light guide member and illumination device that have such a light guide layer, the first region **R1** and the second region **R2** are distinguished from each other, depending on whether or not a plurality of internal spaces constituting a luminous intensity distribution control structure is provided therein. Such a light guide layer is fabricated by, for example, attaching a first film having no pattern and a second film having a desired fine pattern together by a lamination technique or using an adhesive (e.g., a pressure-sensitive adhesive).

The fine pattern is formed in the second film by laser patterning, direct laser imaging, laser drilling, or laser or electronic beam irradiation with or without a mask. In addition, different characteristics may be imparted to the second film by printing, inkjet printing, screen printing, or the like to change the material or refractive index value thereof. Micro/nano-dispensing, dosing, direct "writing," discrete laser sintering, micro-discharge machining (micro-EDM), or micro-machinng, micro-molding, imprinting, embossing, and similar techniques can be used.

### [Another example of light extraction structure]

In the foregoing description, a configuration in which a luminous intensity distribution control structure having a plurality of internal spaces is provided in the light extraction layer **20** or the light guide layer **10** has been described as the light extraction structure that extracts a portion of light propagated in the light guide layer **10** from the first main surface **10m.** The light extraction structure is not limited to this example. Instead of the light extraction layer **20,** a light extraction layer having another light extraction structure on a surface thereof or in the inside thereof may be provided at the first main surface **10m** side or the second main surface **10n** side of the light guide layer **10.** The light extraction structure is configured so as to be able to extract a portion of light propagated in the light guide layer **10** from the first main surface **10m** or the second main surface **10n.** In other words, the light extraction structure causes a portion of light propagated in the light guide layer **10** to be emitted from the second main surface **10n** in the direction toward the first main surface **10m** or from the first main surface **10m** in the direction toward the second main surface **10n.** As such a light extraction layer, known optical sheets such as a prism sheet, micro-lens sheet, lenticular lens sheet, and diffusion film can be used. Instead of the light extraction layer **20,** a concaved-and-convexed (embossed) structure including a plurality of protrusions or recesses formed in the first main surface **10m** or the second main surface **10n** of the light guide layer **10** may be provided as a light extraction structure.

### (Second embodiment)

An illumination device **200B** according to this embodiment will be described with reference to FIG. **5.** FIG. **5** is a schematic plan view of the illumination device **200B.** In the following description, a difference between the illumination device **200B** of this embodiment and the illumination device **200A** of the first embodiment will be mainly described. The illumination device **200B** has a light guide member 110B and a light source LS.

In the illumination device **200A** of the first embodiment shown in FIGS. 1A and 1B, the width Wa of the light guide layer 10 and the width Wb of the first region R1 are uniform, and therefore, the ratio Wb/Wa is also uniform. In contrast to this, in the illumination device **200B,** the ratio Wb/Wa is changed according to distance from the light receiving side surface **10s1** of the light guide layer 10. In the illumination device **200B,** the ratio Wb/Wa is decreased with an increase in distance from the light receiving side surface **10s1** of the light guide layer 10 (i.e., from the light source LS). In the illumination device **200B,** the width Wa of the light guide layer 10 is increased with an increase in distance from the light receiving side surface **10s1** (i.e., from the light source **LS).** The width **Wa** of the light guide layer **10** is smallest at the light receiving side surface **10s1** (the smallest value of the width **Wa** is denoted as **Wa1).** The width **Wa** of the light guide layer **10** is greatest at the side surface **10s2** opposite the light receiving side surface **10s1** (the side surface farther from the light source **LS)** (the greatest value of the width **Wa** is denoted as **Wa2).** In this example, the light guide layer **10** has a trapezoidal shape in a plan view from the normal direction of the first main surface **10m.** Meanwhile, the width **Wb** of the first region **R1** is uniform. The shape of the first region **R1,** i.e., the light extraction layer **20** is rectangular in a plan view from the normal direction of the first main surface **10m.**

In the illumination device **200B** of this embodiment, the ratio **Wb/Wa** of the width **Wb** of the first region **R1** to the width **Wa** of the light guide layer **10** is more than 30% and less than 100%, and the length **Lb** of the first region **R1** is 350 mm or more. Note that the present invention is not limited to the case in which the ratio **Wb/Wa** is more than 30% and less than 100% throughout the first region **R1,** and the first region **R1** may partially have the ratio **Wb/Wa** of more than 30% and less than 100%. A portion of the first region **R1** in which the ratio **Wb/Wa** is more than 30% and less than 100% preferably has a length of 350 mm or more in the first direction. In the illumination device **200B** of this embodiment, the decrease in luminance with an increase in distance from the light source is also reduced as in the illumination device **200A** of the first embodiment.

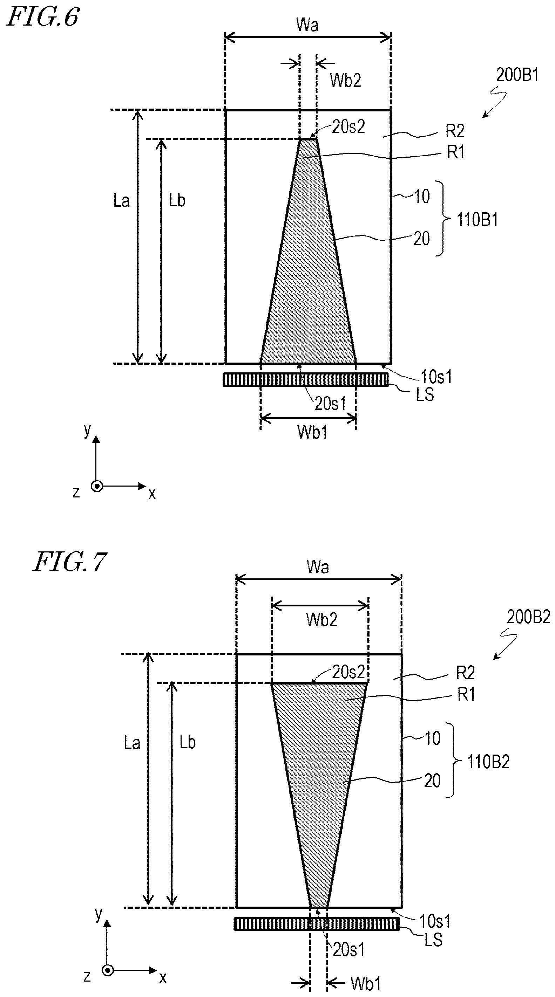

An illumination device **200B1** according to a variation of this embodiment will be described with reference to FIG. **6.** FIG. **6** is a schematic plan view of the illumination device **200B1.** The illumination device **200B1** has a light guide member **110B1** and a light source **LS.** As shown in FIG. **6****,** the illumination device **200B1** may be configured such that the width **Wb** of the first region **R1** decreases with an increase in distance from the light receiving side surface **10s1.** In this example, the width **Wb** of the first region **R1** is greatest at the side surface **20s1** (the greatest value of the width **Wb** is denoted as **Wb1),** and is smallest at the side surface **20s2** opposite the side surface **20s1** (the side surface farther from the light source **LS)** (the smallest value of the width **Wb** is denoted as **Wb2).** The first region **R1** has a trapezoidal shape in a plan view from the normal direction of the first main surface **10m.** The illumination device **200B1** is also configured such that the ratio **Wb/Wa** decreases with an increase in distance from the light receiving side surface **10s1** of the light guide layer **10** (i.e., from the light source **LS).**

An illumination device **200B2** according to another variation of this embodiment will be described with reference to FIG. 7. FIG. 7 is a schematic plan view of the illumination device **200B2.** The illumination device **200B2** has a light guide member **110B2** and a light source **LS.** As shown in FIG. **7****,** the illumination device **200B2** may be configured such that the ratio **Wb/Wa** increases with an increase in distance from the light receiving side surface **10s1** of the light guide layer **10** (i.e., from the light source **LS).** In this example, the width **Wb** of the first region **R1** increases with an increase in distance from the light receiving side surface **10s1.** The width **Wb** of the first region **R1** is smallest at the side surface **20s1** (the smallest value of the width **Wb** is denoted as **Wb1),** and is greatest at the side surface **20s2** opposite the side surface **20s1** (the greatest value of the width **Wb** is denoted as **Wb2).** Instead of this or in addition to this, the width **Wa** of the light guide layer **10** may decrease with an increase in distance from the light receiving side surface **10s1** (i.e., from the light source **LS).**

### (Third embodiment)

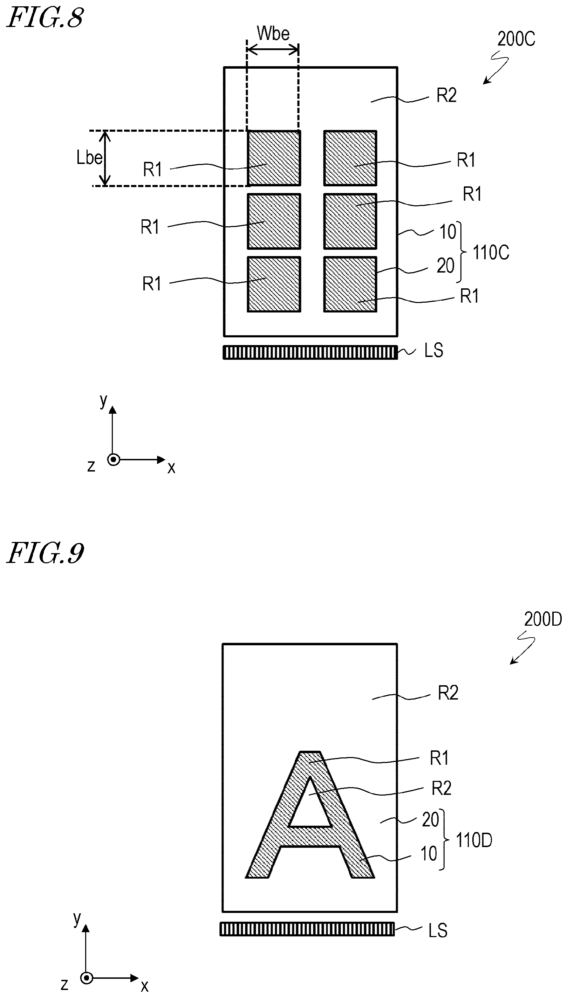

An illumination device **200C** according to this embodiment will be described with reference to FIG. **8.** FIG. **8** is a schematic plan view of the illumination device **200C.** In the following description, a difference between the illumination device **200C** of this embodiment and the illumination device **200A** of the first embodiment will be mainly described. The illumination device **200C** has a light guide member **110C** and a light source **LS.**

In the illumination device **200C,** the first region **R1** includes at least two partial regions that are discretely arranged in the first direction (the y direction in the figures) and in the second direction (the x direction in the figures). The at least two partial regions included in the first region **R1** may be discretely arranged in only one of the first direction or the second direction. A length **Lb** of the first region **R1** is the sum of lengths **Lbe** in the first direction of each partial regions. Likewise, a width **Wb** of the first region **R1** is the sum of lengths **Wbe** in the second direction of each partial regions. A length in the first direction of a gap between partial regions adjacent to each other in the first direction is preferably 10% or less, 5% or less, or 1% or less of the length **Lb** of the first region **R1,** for example. A length in the second direction of a gap between partial regions adjacent to each other in the second direction is preferably 10% or less, 5% or less, or 1% or less of the width **Wb** of the first region **R1,** for example. Although in the illustrated example, the lengths in the first direction, the lengths in the second direction, and the shapes of the partial regions included in the first region **R1** are the same, these may be different.

In the illumination device **200C** of this embodiment, the ratio **Wb/Wa** of the width **Wb** of the first region **R1** to the width **Wa** of the light guide layer **10** is also more than 30% and less than 100%, and the length **Lb** of the first region **R1** is also 350 mm or more. In the illumination device **200C** of this embodiment, the decrease in luminance with an increase in distance from the light source is also reduced as in the illumination device **200A** of the first embodiment.

### [Another example of shape of first region]

The shape of the first region **R1** in a plan view from the normal direction of the first main surface **10m** of the light guide layer **10** is not limited to the rectangular and trapezoidal shapes and the like that have been described above, and may be any shape. For example, the first region **R1** and the second region **R2** may be arranged so as to provide a predetermined graphic as in an illumination device **200D** and a light guide member **110D** included in the illumination device **200D,** which are shown in FIG. **9****.** The illumination device **200D** has a light source **LS** and a light guide member **110D**. As used herein, the "graphic" includes characters, numerals, symbols, pictures, patterns, and combinations thereof, and the like.

### [Experiment examples]

Experiment examples will be described below.

Experimental illumination devices having parameters shown in Table 1A below (samples 1 to 3) were produced, and the luminances thereof were measured. The results of the measurement are shown in Table 1B below and **FIG. 11****.**

Sample 1 (example 1a) and sample 3 (comparative example 2a) have a structure similar to that of the illumination device **200A** shown in FIGS. **1A** and **1B****.** Sample 2 (comparative example 1a) has a structure similar to that of the illumination device **900** shown in FIG. **10****,** which is a comparative example. As the light source **LS,** an LED edge light (Al-6156B, manufactured by A'SYCK Co., Ltd.) was used. The light extraction layer **20** and the internal space **24A** are characterized by the following parameters.

The pitch **Px:** 120 µm, the pitch **Py:** 70 µm
The inclination angle **θa** of the forward inclined surface **ISa:** 49°
The ratio of the area of the plurality of recessed portions **24A** to the area of the light extraction layer **20:** 3.7%
The distance **Lg** between the light receiving side surface **10s1** of the light guide layer **10** and the side surface **20s1** of the light extraction layer **20:** 30 mm

As shown in Table 1A, samples 1 to 3 are different from each other in the ratio **Wb/Wa** of the width **Wb** of the first region **R1** to the width **Wa** of the light guide layer **10.** As shown in Table 1B, in each sample, luminance was measured at four points having different distances from the side surface **20s1** of the light extraction layer **20** in the first direction (the y direction in the figures). That is, luminance was measured at four points having different distances (distances in the first direction) from the light source **LS.** Luminance was measured on the bisector of the width **Wa** of the light guide member. Note that in samples 1 to 3, the bisector of the width **Wa** of the light guide layer **10** coincides with the bisector of the width **Wb of** the light extraction layer **20.** Luminance was measured using the luminance meter SR5000, manufactured by Konica Minolta Japan, Inc. The magnitude of the decrease in luminance with an increase in distance from the light source **LS** was evaluated using the ratio L₅₃₀/L₃₀ of luminance L₅₃₀ at a point having a distance of 530 mm from the side surface **20s1** to luminance L₃₀ at a point having a distance of 30 mm from the side surface **20s1.** As can be seen from Table 1B and FIG. **11****,** the value of the ratio L₅₃₀/L₃₀ is greater in sample 1 in which the ratio **Wb/Wa** is 60% than in sample 2 in which the ratio **Wb/Wa** is 100%, indicating that the decrease in luminance is reduced. The value of the ratio L₅₃₀/L₃₀ is smaller in sample 3 in which the ratio **Wb/Wa** is 20% than in sample 2 in which the ratio **Wb/Wa** is 100%, indicating that the effect of reducing the decrease in luminance was not obtained.

**[Table 1A]**

| | Actual measurement/simul ation | Thickness Da of light guide layer 10 [mm] | Width Wa of light guide layer 10 [mm] | Length La of light guide layer 10 [mm] | Width Wb of first region R1 [mm] | Length Lb of first region R1 [mm] | Distance Lg between light receiving side surface 10s1 and side surface 20s1 [mm] | Ratio Wb/ Wa [%] | Width WI of light source LS [mm] | Number of LEDs | Directional half-power angle of LED [°] |
|---|---|---|---|---|---|---|---|---|---|---|---|
| Example 1a | Actual measurement (sample 1) | | 167 | 1000 | 100 | 970 | 30 | 60 | 100 | 10 | Undetermined |
| Comparative example 1a | Actual measurement (sample 2) | 5 | 145 | 1000 | 145 | 970 | 30 | 100 | 145 | 14 | Undetermined |
| Comparative example 2a | Actual measurement (sample 3) | | 500 | 1000 | 100 | 970 | 30 | 20 | 100 | 10 | Undetermined |

**[Table 1B]**

| | Actual measurement/simulation | Luminance L₃₀ at point 30 mm from side surface 20s1 [cd/cm2] | Luminance L₃₀₀ at point 300 mm from side surface 20s1 [cd/cm2] | Luminance L₅₃₀ at point 530 mm from side surface 20s1 [cd/cm2] | Luminance L₇₀₀ at point 700 mm from side surface 20s1 [cd/cm2] | Evaluation of magnitude of decrease in luminance L₅₃₀ / L₃₀ [%] |
|---|---|---|---|---|---|---|
| Example 1a | Actual measurement (sample 1) | 4481 | 1225 | 522 | 305 | 11.7 |
| Comparative example 1a | Actual measurement (sample 2) | 4711 | 1384 | 419 | 190 | 8.9 |
| Comparative example 2a | Actual measurement (sample 3) | 4526 | 1141 | 219 | 38 | 4.9 |

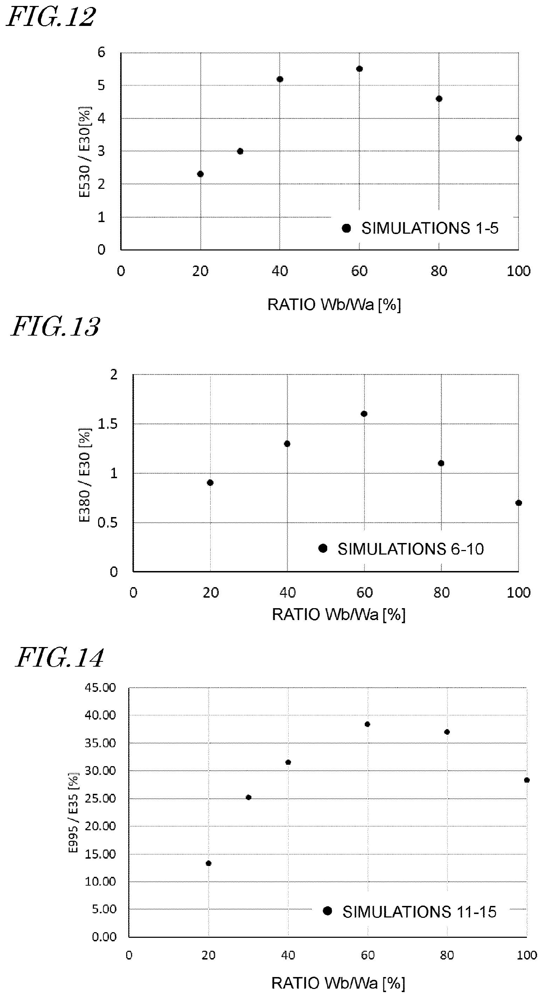

Simulations were conducted using parameters shown in Table 2A below (simulations 1 to 5). The results of the simulations are shown in Table 2B below and FIG. **12****.**

A structure similar to that of the illumination device **200A** shown in FIGS. **1A** and **1B** was used in simulation 2 (example 1b), simulation 3 (example 2b), simulation 4 (example 3b), and simulation 5 (comparative example 2b). A structure similar to that of the illumination device **900** shown in FIG. **10****,** which is a comparative example, was used in simulation 1 (comparative example 1b). The parameters characterizing the light extraction layer **20** and the internal space **24A** are the same as those of samples 1 to 3. Differences from the actual measurements of samples 1 to 3 will be mainly described.

As shown in Table 2A, simulations 1 to 5 are different from each other in the ratio **Wb/Wa** of the width **Wb** of the first region **R1** to the width **Wa** of the light guide layer **10.** As shown in Table 2B, in each simulation, illuminance was obtained at four points having different distances from the side surface **20s1** of the light extraction layer **20** in the first direction (the y direction in the figures). That is, illuminance was obtained at four points having different distances from the light source **LS** (distance in the first direction). Illuminance was obtained on the bisector of the width **Wa** of the light guide member. The magnitude of the decrease in luminance with an increase in distance from the light source **LS** was evaluated using the ratio E₅₃₀/E₃₀ of illuminance E₅₃₀ at a point having a distance of 530 mm from the side surface **20s1** to illuminance E₃₀ at a point having a distance of 30 mm from the side surface **20s1.** As can be seen from Table 2B and FIG. **12****,** the results of simulations 2 to 4 in which the ratio **Wb/Wa** is 40%, 60%, and 80%, respectively, show that the value of the ratio E₅₃₀/E₃₀ is great, and therefore, the decrease in luminance is reduced, compared to the result of simulation 1 in which the ratio **Wb/Wa** is 100%. The result of simulation 5 in which the ratio **Wb/Wa** is 20% shows that the ratio E₅₃₀/E₃₀ is small, and the effect of reducing the decrease in luminance was not obtained, compared to the result of simulation 1 in which the ratio **Wb/Wa** is 100%. The results of the simulations are consistent with the results of actual measurement shown in Table 1B and FIG. **11****.** The graph of FIG. **12** additionally shows the result of a simulation in which the ratio **Wb/Wa** is 30%. In the case in which the ratio **Wb/Wa** is 30%, the effect of reducing the decrease in luminance was not obtained, compared to the case in which the ratio **Wb/Wa** is 100%. As can be seen from FIG. **12****,** if the ratio **Wb/Wa** is more than 30% and less than 100%, the effect of reducing the decrease in luminance is obtained, compared to the case in which the ratio **Wb/Wa** is 100%.

**[Table 2A]**

| | Actual measurement/simulati on | Thickness Da of light guide layer 10 [mm] | Width Wa of light guide layer 10 [mm] | Length La of light guide layer 10 [mm] | Width Wb of first region R1 [mm] | Length Lb of first region R1 [mm] | Ratio Wb/Wa [%] | Width WI of light source LS [mm] | Number of LEDs | Directional half-power angle of LED [°] |
|---|---|---|---|---|---|---|---|---|---|---|
| Comparative example 1b | Simulation 1 | | 145 | 1000 | 145 | 970 | 100 | 100 | 28 | 120° (±60°) |
| Example 1b | Simulation 2 | | 181 | 1000 | 145 | 970 | 80 | 145 | 28 | 120° (±60°) |
| Example 2b | Simulation 3 | 5 | 242 | 1000 | 145 | 970 | 60 | 145 | 28 | 120° (±60°) |
| Example 3b | Simulation 4 | | 363 | 1000 | 145 | 970 | 40 | 145 | 28 | 120° (±60°) |
| Comparative example 2b | Simulation 5 | | 725 | 1000 | 145 | 970 | 20 | 100 | 28 | 120° (±60°) |

**[Table 2B]**

| | Actual measurement/simulation | Illuminance E₃₀ at point 30 mm from side surface 20s1 [lux] | Illuminance E₃₀₀ at point 300 mm from side surface 20s1 [lux] | Illuminance E₅₃₀ at point 530 mm from side surface 20s1 [lux] | Illuminance E₇₀₀ at point 700 mm from side surface 20s1 [lux] | Evaluation of magnitude of decrease in luminance E₅₃₀ / E₃₀ [%] |
|---|---|---|---|---|---|---|
| Comparative example 1b | Simulation 1 | 4098 | 521 | 141 | 94 | 3.4 |
| Example 1b | Simulation 2 | 4092 | 533 | 187 | 120 | 4.6 |
| Example 2b | Simulation 3 | 4086 | 486 | 223 | 153 | 5.5 |
| Example 3b | Simulation 4 | 4085 | 326 | 211 | 177 | 5.2 |
| Comparative example 2b | Simulation 5 | 4087 | 332 | 93 | 55 | 2.3 |

Simulations were conducted using parameters shown in Table 3A below (simulations 6 to 10). The results of the simulations are shown in Table 3B below and FIG. **13****.** Simulations 6 to 10 are mainly different from simulations 1 to 5 in that the thickness **Da** of the light guide layer **10** was 2 mm in the former whereas the thickness **Da** of the light guide layer **10** was 5 mm in the latter. Differences from simulations 1 to 5 will be mainly described.

Simulation 7 (example 1c), simulation 8 (example 2c), simulation 9 (example 3c), and simulation 10 (comparative example 2c) were conducted using a structure similar to that of the illumination device **200A** of FIGS. **1A** and **1B****.** Simulation 6 (comparative example 1c) was conducted using a structure similar to that of the illumination device **900** of FIG. **10****,** which is a comparative example. Parameters characterizing the light extraction layer **20** and the internal space **24A** are the same as those of simulations 1 to 5. In simulations 6 to 10, illuminance was obtained at two points having different distances from the side surface **20s1** of the light extraction layer **20** in the first direction (the y direction in the figures). The magnitude of the decrease in luminance with an increase in distance from the light source **LS** was evaluated using the ratio E₃₈₀/E₃₀ of illuminance E₃₈₀ at a point having a distance of 380 mm from the side surface **20s1** to illuminance E₃₀ at a point having a distance of 30 mm from the side surface **20s1.** As can be seen from Table 3B and FIG. **13****,** the results of simulations 7 to 9 in which the ratio **Wb/Wa** are 40%, 60%, and 80%, respectively, show that the value of the ratio E₃₈₀/E₃₀ is great, and therefore, the decrease in luminance is reduced, compared to the result of simulation 6 in which the ratio **Wb/Wa** is 100%.

**[Table 3A]**

| | Actual measurement/Simu lation | Thickness Da of light guide layer 10 [mm] | Width Wa of light guide layer 10 [mm] | Length La of light guide layer 10 [mm] | Width Wb of first region R1 [mm] | Length Lb of first region R1 [mm] | Ratio Wb/Wa [%] | Width WI of light source LS [mm] | Number of LEDs | Directional half-power angle of LED [°] |
|---|---|---|---|---|---|---|---|---|---|---|
| Comparative example 1c | Simulation 6 | | 145 | 1000 | 145 | 970 | 100 | 100 | 28 | 120° (±60°) |
| Example 1c | Simulation 7 | | 181 | 1000 | 145 | 970 | 80 | 145 | 28 | 120° (±60°) |
| Example 2c | Simulation 8 | 2 | 242 | 1000 | 145 | 970 | 60 | 145 | 28 | 120° (±60°) |
| Example 3c | Simulation 9 | | 363 | 1000 | 145 | 970 | 40 | 145 | 28 | 120° (±60°) |
| Comparative example 2c | Simulation 10 | | 725 | 1000 | 145 | 970 | 20 | 100 | 28 | 120° (±60°) |

**[Table 3B]**

| | Actual measurement/Simulation | Illuminance E₃₀ at point 30 mm from side surface 20s1 [lux] | Illuminance E₃₈₀ at point 380 mm from side surface 20s1 [lux] | Evaluation of magnitude of decrease in luminance E₃₈₀ / E₃₀ [%] |
|---|---|---|---|---|
| Comparative example 1c | Simulation 6 | 10011 | 73 | 0.7 |
| Example 1c | Simulation 7 | 10052 | 107 | 1.1 |
| Example 2c | Simulation 8 | 10048 | 158 | 1.6 |
| Example 3c | Simulation 9 | 10068 | 128 | 1.3 |
| Comparative example 2c | Simulation 10 | 10115 | 94 | 0.9 |

Simulations 11 to 15 were conducted in which the ratio (occupancy area ratio) of the area of the plurality of recessed portions **24A** to the area of the light extraction layer **20** was varied. Simulations 11 to 15 are mainly different from simulations 1 to 5 in that the occupancy area ratio of the plurality of recessed portions **24A** is less than 1% in the former. FIG. **14** shows the results of simulations 11 to 15. Differences from simulations 1 to 5 will be mainly described below.

In simulations 11 to 15, the magnitude of the decrease in luminance with an increase in distance from the light source **LS** was evaluated using the ratio E₉₉₅/E₃₅ of illuminance E₉₉₅ at a point having a distance of 995 mm from the side surface **20s1** of the light extraction layer **20** to illuminance E₃₅ at a point having a distance of 35 mm from the side surface **20s1.** In simulations 11 to 15, illuminance was obtained at an end portion in the second direction (the x direction in the figures) of the light guide member. As can be seen from FIG. **14****,** in the case in which the ratio **Wb/Wa** is 40%, 60%, and 80%, respectively, the value of the ratio E₉₉₅/E₃₅ is great, and therefore, the decrease in luminance is reduced, compared to the case in which the ratio **Wb/Wa** is 100%.

The results of the simulations are collectively shown in Table 4 and Table 5.

**[Table 4]**

| | Thickness Da of light guide layer 10 [mm] | Occupancy area ratio of recessed portions 24A [%] | Evaluation of magnitude of decrease in luminance | Ratio Wb/Wa: 100% | Ratio Wb/Wa: 80% | Ratio Wb/Wa: 60% | Ratio Wb/Wa: 40% | Ratio Wb/Wa: 20% |
|---|---|---|---|---|---|---|---|---|
| Simulations 1-5 | 5 | 3.7 | E₅₃₀ / E₃₀ [%] | 3.4 | 4.6 | 5.5 | 5.2 | 2.3 |
| Simulations 6-10 | 2 | 3.7 | E₃₈₀ / E₃₀ [%] | 0.7 | 1.1 | 1.6 | 1.3 | 0.9 |

**[Table 5]**

| | Thickness Da of light guide layer 10 [mm] | Occupancy area ratio of recessed portions 24A [%] | Decrease in luminance when ratio Wb/Wa is more than 30% and less than 100% ("∘" : More reduced than when ratio Wb/Wa is 100% "x" : Less reduced than when ratio Wb/Wa is 100%) | | | |
|---|---|---|---|---|---|---|
| | | | Distance from side surface 20s1: 350 mm | Distance from side surface 20s1 : 500 mm | Distance from side surface 20s1 : 700 mm | Distance from side surface 20s1 : More than 1000 mm |
| Simulations 11-15 | 5 | <1 | x | x | x | ○ |
| Simulations 1-5 | 5 | 3.7 | x | ○ | ○ | ○ |
| Simulations 6-10 | 2 | 3.7 | ○ | ○ | ○ | ○ |

Table 4 shows the results of the simulations in which the thickness **Da** of the light guide layer **10** was varied, for comparison. As can be seen from Table 4, even in the case in which the thickness **Da** of the light guide layer **10** is varied, then if the ratio **Wb/Wa** of the width **Wb** of the first region **R1** to the width **Wa** of the light guide layer **10** is more than 30% and less than 100%, the effect of reducing the decrease in luminance is obtained, compared to the case in which the ratio **Wb/Wa** is 100%. In the case in which the thickness **Da** of the light guide layer **10** is 5 mm (simulations 1 to 5) and 2 mm (simulations 6 to 10), the greatest effect is obtained at or near the ratio **Wb/Wa** of 60%. For example, the ratio **Wb/Wa** is preferably 40% or more and 90% or less, more preferably 40% or more and 80% or less, and may be more than 40% and less than 80%, and more preferably 50% or more and 70% or less.

Table 5 shows the results of the simulations in which the thickness **Da** of the light guide layer **10** was varied and the occupancy area ratio of the internal space **24A** was varied, for comparison. Table 5 shows whether or not the effect of reducing the decrease in luminance was obtained, for four points having different distances from the side surface **20s1** of the light extraction layer **20,** compared to the case in which the ratio **Wb/Wa** was 100%. A case in which the effect of reducing the decrease in luminance was obtained compared to the case in which the ratio **Wb/Wa** was 100% is indicated by "○," and a case in which the effect of reducing the decrease in luminance was not obtained compared to the case in which the ratio **Wb/Wa** was 100% is indicated by "x." In the case in which the thickness **Da** of the light guide layer **10** is 2 mm, the effect of reducing the decrease in luminance was obtained at points having a shorter distance from the side surface **20s1** (i.e., from the light source **LS),** compared to the case in which the thickness **Da** of the light guide layer **10** is 5 mm. In the case in which the thickness **Da** of the light guide layer **10** is small, the magnitude of the decrease in luminance with an increase in distance from the light source **LS** is great. Therefore, it is considered that the effect of reducing the decrease in luminance was obtained at points having a smaller distance from the side surface **20s1** (i.e., from the light source **LS).** In the case in which the occupancy area ratio of the internal space **24A** is less than 1%, the magnitude of the decrease in luminance with an increase in distance from the light source LS is small compared to the case in which the occupancy area ratio of the internal space **24A** is 3.7%. Therefore, it is considered that the effect of reducing the decrease in luminance was not obtained, except for points having a greater distance from the side surface **20s1** (i.e., the distance from the light source **LS).** The problem that luminance decreases with an increase in distance from the light source is particularly significant with an illumination device having a great length (length along the light guide direction of the light guide layer) from the light source. In order to reduce the decrease in luminance with an increase in distance from the light source **LS,** it is preferable that the length (e.g., the length of the light extraction layer **20) Lb** of the first region **R1** be more than a predetermined value. It can be understood that for example, the length (e.g., the length of the light extraction layer **20) Lb** of the first region **R1** may be preferably 350 mm or more, although the predetermined value may vary depending on the thickness **Da** of the light guide layer **10,** parameters characterizing the light extraction structure, and the like.

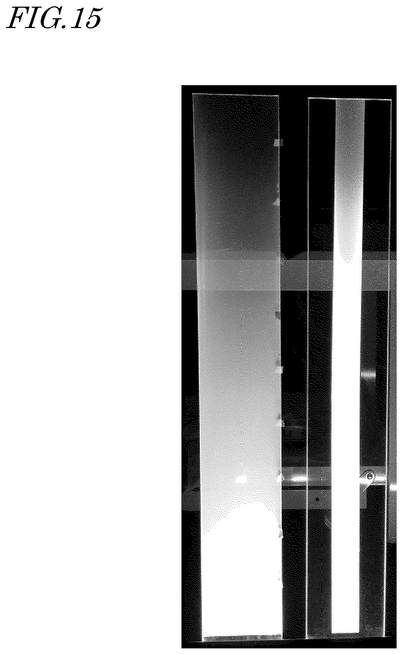

FIG. **15** shows an optical image of experimental illumination devices. The illumination device on the left side of FIG. **15** has a structure similar to that of the illumination device **900** of FIG. 10, which is a comparative example. The illumination device on the right side of FIG. **15** has a structure similar to that of the illumination device **200A** of FIGS. **1A** and **1B****.** The left illumination device of FIG. **15** is different from the right illumination device of FIG. **15** in that the ratio **Wb/Wa** is 100% in the former. Parameters characterizing the right illumination device of FIG. **15** are described as follows.

The width **Wb of** the light extraction layer **20:** 50 mm, the width **Wa** of the light guide layer **10:** 145 mm
The ratio **Wb/Wa:** 34.5%
The length **Lb** of the light extraction layer **20:** 970 mm, the length **La** of the light guide layer **10:** 1000 mm
The pitch **Px:** 120 µm, the pitch **Py:** 70 µm
The inclination angle **θa** of the forward inclined surface **ISa:** 49°
The ratio of the area of the plurality of recessed portions **24A** to the area of the light extraction layer **20:** 3.7%

It is understood that in the illumination device on the reight side of FIG. **15****,** the decrease in luminance with an increase in distance from the light source (provided below the light guide member in FIG. **15****)** is reduced, compared to the illumination device on the left side of FIG. **15****.**

### INDUSTRIAL APPLICABILITY

According to the embodiments of the present invention, provided are an illumination device in which a decrease in luminance with an increase in distance from a light source is reduced, and a light guide member used in such an illumination device.

### REFERENCE SIGNS LIST

**10:** light guide layer
**20:** light extraction layer
**110A, 110A1, 110B, 110B1, 110B2, 110C, 110D:** light guide member
**200A, 200A1, 200B, 200B1, 200B2, 200C, 200D:** illumination device
LS: light source
**R1:** first region
**R2:** second region

## Claims

1. A light guide member comprising:
a light guide layer having a first main surface, a second main surface at an opposite side from the first main surface, and a light receiving portion configured to receive light emitted from a light source; and
a light extraction structure configured to extract a portion of light propagated in the light guide layer from the first main surface or the second main surface, wherein
the light guide member has a first region in which the light extraction structure is present, and a second region in which the light extraction structure is not present, in a plan view from a normal direction of the first main surface,
a length of the first region in a first direction parallel to a light guide direction of the light guide layer is 350 mm or more, and
a ratio **Wb/Wa** of a length **Wb** of the first region in a second direction crossing the first direction to a length **Wa** of the light guide layer in the second direction is more than 30% and less than 100%.

2. The light guide member of claim 1, wherein the ratio **Wb/Wa** is 40% or more and 90% or less.

3. The light guide member of claim 1 or 2, wherein the light extraction structure has a plurality of internal spaces configured to extract light by total internal reflection.

4. The light guide member of claim 3, wherein a ratio of an area of the plurality of internal spaces to an area of the first region is 3% or more, in a plan view from the normal direction of the first main surface.

5. The light guide member of any one of claims 1 through 4, wherein the light extraction structure is formed in a light extraction layer provided at the first main surface side or the second main surface side of the light guide layer.

6. The light guide member of any one of claims 1 through 5, wherein the first region includes at least two partial regions discretely arranged in the first direction.

7. The light guide member of any one of claims 1 through 6, wherein the first region includes at least two partial regions discretely arranged in the second direction.

8. The light guide member of any one of claims 1 through 7, wherein the ratio **Wb/Wa** decreases with an increase in distance from the light receiving portion.

9. The light guide member of claim 8, wherein the length **Wa** of the light guide layer in the second direction increases with an increase in distance from the light receiving portion.

10. The light guide member of claim 8 or 9, wherein the length **Wb** of the first region in the second direction decreases with an increase in distance from the light receiving portion.

11. The light guide member of any one of claims 1 through 7, wherein the ratio **Wb/Wa** increases with an increase in distance from the light receiving portion.

12. An illumination device comprising:
the light guide member of any one of claims 1 through 11; and
a light source disposed so as to emit light toward the light receiving portion of the light guide member.
